# EUROPEAN PATENT APPLICATION

(11) **EP 4 715 070 A1**
(43) Date of publication of application: **25.03.2026**
(21) Application number: 24201832.3
(22) Date of filing: 23.09.2024
(51) Int. Cl.: C22B 7/00, B01J 23/44, B01J 23/63, C01B 21/26, C01B 21/38, C22B 11/02

(54) **SYSTEM FOR RECOVERING VOLATILE PD AND METHOD THEREOF**

(71) Applicant: Yara International ASA, 0277 Oslo (NO)
(72) Inventor: Waller, David, 3931 Porsgrunn (NO)
(74) Representative: De Clercq & Partners

(57) **Abstract**

The present disclosure discloses a catalytic system comprising a Pd-containing catalyst, and a recovery system downstream of the catalyst, wherein the recovery system comprises one or more oxide of a rare earth metal selected from the group consisting of Sm₂O₃ and Gd₂O₃. The present disclosure further relates to the use of one or more oxides of a rare earth metal selected from the group consisting of Sm₂O₃, and Gd₂O₃ for recovering volatile Pd and to a method for recovering volatile Pd.

## Description

### TECHNICAL FIELD

The present application is in the field of the recovery of volatile precious metals, particularly volatile Pd from a gas phase.

### BACKGROUND

Several reactions require a catalyst to proceed at an acceptable rate and to produce the desired products. Such catalysts are often based upon precious, heavy metals, such as the so-called platinum group metals. The six platinum-group metals are ruthenium (Ru), rhodium (Rh), palladium (Pd), osmium (Os), iridium (Ir), and platinum (Pt).

For example, platinum (Pt), palladium (Pd) and rhodium (Rh) are commonly used as catalysts among others in the Ostwald process for nitric acid production, for oxidising ammonia into nitric oxide, and in the Andrussow process for hydrogen cyanide production, for reacting ammonia with oxygen and methane.

A problem associated with catalysis using platinum group metals, particularly Pt, Pd and Rh is that, due the high temperature at which catalysis is performed, for example from 700 to 950 °C or over 1000 °C or over 1100 °C, some of these metals evaporate, in particular when the catalysis is performed in the presence of oxygen.

The recovery of volatile platinum containing catalyst systems is well documented. For example, GB1343637 relates to a process and a related device for recovering platinum metals entrained in a hot gas stream (as in the manufacture of nitric acid) wherein the gas is passed through a gettering device in the form of an inert ceramic honeycomb structure which is coated with a getter containing Pd to absorb the volatile platinum.

EP0063450 generally discloses a getter device and a related process for recovery of a precious metal lost from a precious metal-containing catalyst operating at elevated temperature, wherein the getter comprises an agglomeration or assemblage of unwoven fibres made from a metal selected from the group ruthenium, palladium, iridium, platinum, gold, silver, rhodium and alloys containing one or more or the said metals. The document primarily focuses on Pd/Au alloys.

GB668935 relates to a process and related device for platinum recovery of volatilized platinum, originating from a catalyst. In this context, GB668935 claims a process for recovery of platinum, wherein the platinum is trapped on the surface of baffles, disposed at a place where the temperature is at least 700 °C and wherein some of the baffles have a coating of silver or of a silver alloy with gold, palladium or platinum.

US20130149207 relates to an exhaust system arrangement comprising a Pt and Pd catalyst and a downstream SCR catalyst and a component capable of trapping and/or alloying with a gas phase platinum group metal, wherein this component is typically a metal selected from the group consisting of gold, palladium and silver, preferably a Pd/Au alloy.

On the side of rhodium capture, US4774069A discloses a process for the manufacture of nitric oxide by oxidising ammonia in the presence of a catalyst comprising platinum and from 0 to 20 wt % of rhodium and from 0 to 40 wt % of palladium (based on the weight of alloy), the catalyst being located upstream from a catchment trap for scavenging platinum or rhodium lost from the catalyst. The catchment trap comprises an alloy of Pd with at least one compound selected from the group consisting of the oxides, borides, carbides, silicides, nitrides and silicates of aluminum, zirconium, boron, silicon, magnesium, titanium, yttrium, beryllium, thorium, manganese, lanthanum, scandium, calcium, uranium, chromium, niobium and hafnium.

Palladium occupies an important place in numerous industries and is known for its potent catalytic properties in a variety of organic reactions and is exploited as a stable oxidation catalyst in catalytic converters. Most of the global palladium demand is for producing the oxidation catalyst. However, the recycled palladium in spent catalyst material is less than the global consumption. Around the world, the resources of palladium are scarce. The proven reserves of palladium worldwide are 67,000 tons, which is less than that of gold (USGS Survey, 2017). Generally, the ores deposits containing 0.001% (namely 10 g/t) of palladium possess the value of exploitation. It was reported by Johnson Matthey that, in 2012, gross demands for Pd, in the field of auto-exhaust catalyst was 216.8 tons (72% of gross Pd demand). The unrelenting demand for platinum group metals, in particular Pd, has resulted in record prices and their supply is plagued with concerns over the environmental impact of their production and finite natural supply. Pd lost in the ammonia oxidation burners is known to be captured by periodically collecting dust in downstream filters and washing the internal pipe work and heat exchangers downstream of the burner. For this reason, the efficient recycling of palladium in catalyst material could generate substantial environmental and economic benefits.

The recycling of palladium is a great challenge due to its low content and chemical inertness and is significantly less documented than platinum capture. Thus, it is of great interest to recover as much volatile palladium as possible. There is thus a need in the art for compounds and materials for recovering volatile Pd and that are stable under ambient air.

### SUMMARY

The present application addresses one or more of the above indicated needs. The inventors have surprisingly found that certain oxides of rare earth metals as further defined herein are stable and effective recovery agents for recovering or trapping the precious metals, in particular palladium. However, as will be shown in the examples, the inventors have established that not all rare earth metal oxides are suitable for recovering volatile Pd.

In one aspect of the disclosure, a catalytic system is disclosed. The system comprises:
- a Pd-containing catalyst; and
- a recovery system downstream of the catalyst.

The system is characterised in that the recovery system comprises one or more oxide of a rare earth metal selected from the group consisting of Sm₂O₃ and Gd₂O₃.

In one embodiment according to the system of the disclosure, the catalytic system further comprises a Pd-containing catchment system, particularly for the capture of volatile precious metals, more particularly for capture of Pt, wherein the Pd-containing catchment system is positioned between the Pd-containing catalyst and the recovery system comprising one or more oxide of a rare earth metal selected from the group consisting of Sm₂O₃ and Gd₂O₃.

In one embodiment according to the system of the disclosure, the Pd-containing catchment system comprises an alloy of Pd with metals selected from but not limited to Ni, Co, Ag, Rh or combinations thereof. In one embodiment, the Pd-containing catchment system is based on a 5wt% Ni in Pd alloy. The Pd-containing catchment system captures Pt in the gas phase and also tends to lose Pd due to high burner temperatures.

In one embodiment according to the system of the disclosure, the Pd-containing catchment system is in the form of a gauze or a metallic Pd layer on a ceramic support. The ceramic support is selected from but not limited to Al₂O₃, MgO, ZrO₂, yttria, magnesium or calcium stabilized zirconia, MgO, MgAl₂O₄, calcium aluminates, magnesium aluminium silicates, aluminium silicates, and silicon carbides.

In one embodiment according to the system of the disclosure, the catalytic system is a system for the catalytic conversion of ammonia into nitric oxide, for the generation of nitric acid, such as present in an ammonia oxidation burner, or the catalytic system is a catalytic system for the catalytic conversion of ammonia, oxygen and methane into hydrogen cyanide, such as present in a reactor for reacting ammonia, oxygen and methane, thereby generating hydrogen cyanide.

In one embodiment according to the system of the disclosure, the recovery system comprises Sm₂O₃.

n one embodiment according to the system of the disclosure, the recovery system comprises Gd₂O₃.

In one embodiment according to the system of the disclosure, the Pd-containing catalyst is in the form of a catalytic gauze, and/or the recovery system has the shape of a honeycomb, a tablet, a pellet, a sponge, a foam, a net or a gauze, a coating on a ceramic support or a metallic support.

The ceramic support is selected from but not limited to Al₂O₃, MgO, ZrO₂, yttria, magnesium or calcium stabilized zirconia, MgO, MgAl₂O₄, calcium aluminates, magnesium aluminium silicates, aluminium silicates, and silicon carbides.

The non-limiting examples of metallic support can be metal meshes, metal screens, ferritic steels, nickel-based alloys, iron-chromium-aluminium alloys and chromium-aluminium-iron alloys.

In one aspect of the disclosure, use of the catalytic system comprising a Pd-containing catalyst and a recovery system downstream of the catalyst comprising one or more oxide of a rare earth metal selected from the group consisting of Sm₂O₃ and Gd₂O₃, for recovering volatile Pd, is disclosed.

In one embodiment according to the use of the disclosure, volatile Pd is generated from the catalytic oxidation of ammonia into nitric oxide, or volatile Pd is generated from the catalytic reaction of ammonia with oxygen and methane, thereby generating hydrogen cyanide.

In one embodiment according to the use of the disclosure, volatile Pd is further generated from a Pd-containing catchment system, positioned between the Pd-containing catalyst and the recovery system.

In one embodiment according to the use of the disclosure, the oxide of the rare earth metal is Sm₂O₃.

In one embodiment according to the use of the disclosure, the oxide of the rare earth metal is Gd₂O₃.

In one embodiment according to the use of the disclosure, the oxide of a rare earth metal is comprised in a recovery system that has the shape of a honeycomb, a tablet, a pellet, a sponge, a foam, a net or a gauze, a coating on a ceramic support or a metallic support.

The ceramic support is selected from but not limited to Al₂O₃, MgO, ZrO₂, yttria, magnesium or calcium stabilized zirconia, MgO, MgAl₂O₄, calcium aluminates, magnesium aluminium silicates, aluminium silicates, and silicon carbides.

The non-limiting examples of metallic support can be metal meshes, metal screens, ferritic steels, nickel-based alloys, iron-chromium-aluminium alloys and chromium-aluminium-iron alloys.

In one aspect of the disclosure, a method for oxidising ammonia into nitric oxide or for reacting ammonia with oxygen and methane, thereby generating hydrogen cyanide, is disclosed. The method comprises the steps of:
a) catalytically oxidising ammonia into nitric oxide, particularly in the production of nitric acid, at a temperature ranging from 700 to 1100°C, more preferably from 700 to 950°C; or catalytically reacting ammonia with oxygen and methane thereby generating hydrogen cyanide, whereby volatile Pd is generated, particularly with a Pd-containing catalytic system;
b) contacting the volatile Pd generated in step a) with a recovery system comprising one or more oxide of a rare earth metal selected from the group consisting of Sm₂O₃ and Gd₂O₃; and
c) forming a solid composition comprising the oxide of a rare earth metal and Pd, wherein the oxides of the rare earth metal are bonded with Pd.

In one embodiment according to the method of the disclosure, in step a), volatile Pd is further generated from a Pd-containing catchment system, positioned between the Pd-containing catalytic system and the recovery system.

In one embodiment according to the method of the disclosure, in step b), volatile Pd generated from a Pd-containing catchment system contacts the recovery system.

In one embodiment according to the method of the disclosure, the method further comprises the step d) recovering Pd from the solid composition comprising the oxide of a rare earth metal and Pd.

In one embodiment according to the method of the disclosure, step a) is performed with a catalytic gauze, and step b) is performed with a recovery system that has the shape of a honeycomb, a tablet, a pellet, a sponge, a foam, a net or a gauze, a coating on a ceramic support or a metallic support.

The ceramic support is selected from but not limited to Al₂O₃, MgO, ZrO₂, yttria, magnesium or calcium stabilized zirconia, MgO, MgAl₂O₄, calcium aluminates, magnesium aluminium silicates, aluminium silicates, and silicon carbides.

The non-limiting examples of metallic support can be metal meshes, metal screens, ferritic steels, nickel-based alloys, iron-chromium-aluminium alloys and chromium-aluminium-iron alloys.

In one embodiment according to the method of the disclosure, in step b), the oxide of the rare earth metal is Sm₂O₃.

In one embodiment according to the method of the disclosure, in step b), the oxide of the rare earth metal is Gd₂O₃.

In one embodiment according to the method of the disclosure, step a) comprises catalytically oxidising ammonia into nitric oxide at a temperature ranging from 700 to 950 °C, particularly at a pressure ranging between 2 bar and 20 bar.

### DETAILED DESCRIPTION

Throughout the description and claims of this specification, the words "comprise" and variations thereof mean "including but not limited to", and they are not intended to (and do not) exclude other moieties, additives, components, integers or steps. Throughout the description and claims of this disclosure, the singular encompasses the plural unless the context otherwise requires. In particular, where the indefinite article is used, the disclosure is to be understood as contemplating plurality as well as singularity, unless the context requires otherwise.

Features, integers, characteristics, compounds, chemical moieties, or groups described in conjunction with a particular aspect, embodiment or example of the disclosure are to be understood to be applicable to any other aspect, embodiment or example described herein unless incompatible therewith. All of the features disclosed in this disclosure (including the description, claims, abstract and drawing), and/or all of the steps of any method or process so disclosed, may be combined in any combination, except combinations where at least some of such features and/or steps are mutually exclusive. The disclosure is not restricted to the details of any foregoing embodiments. The disclosure extends to any novel one, or any novel combination, of the features disclosed in this disclosure (including the description, claims, abstract and drawing), or to any novel one, or any novel combination, of the steps of any method or process so disclosed.

The enumeration of numeric values by means of ranges of figures comprises all values and fractions in these ranges, as well as the cited end points. The terms "ranging from ... to ..." or "range from ... to ..." or "up to" as used when referring to a range for a measurable value, such as a parameter, an amount, a time period, and the like, is intended to include the limits associated to the range that is disclosed.

The present application generally provides method and system for the recovery of one or more volatile platinum group metals, present in a gas phase.

As used herein, the terms "recover"/"recovery" are used interchangeably with the terms "capture", "capturing", "catchment", "retain"/"retaining", or "trapping". These terms are used in the meaning that the element that is recovered or captured by a recovery system according to the present application is incorporated into the rare earth metal oxide crystal lattice or forms a compound with the rare earth metal oxide. The recovery or capture of a particular element by a recovery system according to the present application can be determined by scanning electron microscope (SEM) with energy dispersive X-ray fluorescence analysis (EDS) and/or by X-Ray diffraction (XRD) analysis, particularly by comparing the data obtained by these techniques before and after contacting the recovery system according to the present application with a gas comprising one or more volatile platinum group metals, in particular Pd. EDS analysis will demonstrate the presence or absence of the metal of interest to be recovered in the recovery system. XRD shows the effect of the incorporation of the metal of interest to be recovered in the recovery system, particularly in the crystal structure of the recovery agent, as further described herein, or as a formed compound with the recovery agent.

In one aspect of the disclosure, a catalytic system is disclosed. In general, the catalytic system comprises a catalyst comprising one or more platinum-group metals, and a recovery system, positioned downstream of the catalyst, for recovering volatile platinum-group metals that are released from the catalyst during operation. In particular, the system according to the present disclosure comprises:
- a Pd-containing catalyst; and
- a recovery system downstream of the catalyst.

The system is characterised in that the recovery system comprises one or more oxides of a rare earth metal selected from the group consisting of Sm₂O₃ and Gd₂O₃, particularly in crystalline form.

In one embodiment according to the system of the disclosure, the catalytic system further comprises a Pd-containing catchment system particularly for the capture of volatile precious metals, released from the catalyst comprising one or more platinum-group metals, more particularly for capture of Pt, wherein the Pd-containing catchment system is positioned between the Pd-containing catalyst and the recovery system comprising one or more oxide of a rare earth metal selected from the group consisting of Sm₂O₃ and Gd₂O₃.

In one embodiment according to the system of the disclosure, the Pd-containing catchment system comprises an alloy of Pd with metals selected from but not limited to Ni, Co, Ag, Rh or combinations thereof. In one embodiment according to the system of the disclosure, the Pd-containing catchment system is based on a 5wt% Ni in Pd alloy.

In one embodiment according to the system of the disclosure, the Pd-containing catchment system is in the form of a gauze or metallic Pd layer on a ceramic support. The ceramic support is selected from but not limited to Al₂O₃, MgO, ZrO₂, yttria, magnesium or calcium stabilized zirconia, MgO, MgAl₂O₄, calcium aluminates, magnesium aluminium silicates, aluminium silicates, and silicon carbides.

The Pd-containing catchment system captures Pt in the gas phase and also tends to lose Pd due to high burner temperatures. The Pd lost from the Pd-containing catchment system is captured by the recovery system of the present disclosure. Advantageously, the recovery system of the present disclosure, allows to maximize the recovery of volatile precious metals, particularly Pd lost from the gas phase from the Pd-containing catalyst and/or Pd-containing catchment system in the most cost-effective way.

By a catalytic system, it is meant herein, a system comprising a catalyst, with which the chemical activation barrier for reacting two chemicals is lowered, such that the reaction can be performed using less energy. The catalyst as considered herein typically comprises at least Pd, but may contain other metals or metal containing compounds as well, including but not limited to other platinum group metals, such as Pd, Ir, Ru, Os; and/or other metals, such as Au, Ar, Cu, Fe, Ni, Co and the like; and/or compounds or alloys containing one or more of said metals. In the context of the present disclosure, during operation of the catalyst, at least Pd is liberated in the gas phase, in other words volatile Pd is generated.

By recovery system, it is meant a system in which the volatile catalyst metal, in particular the volatile platinum group metal, more in particular volatile Pd, present in the gas phase and generated (as a by-product) during a catalytic reaction in the catalytic system is recovered, as defined above. The recovery system according to the present disclosure particularly recovers at least Pd through retaining or capturing at least Pd onto the rare earth metal oxide as further defined herein, in particular by incorporating Pd into the crystal lattice of the rare earth metal oxide. The inventor has surprisingly found that the oxides of rare earth metals, in particular Sm₂O₃ and Gd₂O₃, retain volatile Pd, thereby allowing to recover the volatile Pd that would otherwise be lost in the gas phase. Thereby, both emissions in the air and loss of precious and expensive metals are mitigated. It was further observed that in contrast to the above mentioned oxides, CeOz did not retain volatile Pd. Hence, Sm₂O₃ and Gd₂O₃ have the ability to complex with Pd. Advantageously, the formed complexes are stable: upon shut-down of the reactor and exposure to ambient temperature and ambient air, the complexes do not hydrate and do not become brittle and dusty.

In one embodiment according to the system of the disclosure, the catalytic system is an ammonia oxidation burner, whereby nitric oxide therefore is generated. In one embodiment, the catalytic system is a reactor for reacting ammonia, oxygen and methane, thereby generating hydrogen cyanide. Stated differently, in certain embodiments, the catalytic system is a system for the catalytic conversion of ammonia into nitric oxide, for the generation of nitric acid, or the catalytic system is a system for the catalytic conversion of ammonia, oxygen and methane, for the generation of hydrogen cyanide. The present invention thus considers an ammonia oxidation burner comprising a catalytic system according to the present disclosure, or a reactor for the manufacture of hydrogen cyanide by the catalytic reaction of ammonia, methane and oxygen, comprising a catalytic system according to the present disclosure.

The present disclosure addresses the recovery of at least volatile Pd from a gas phase. Two very well know industrial production processes are the production of nitric acid according to the Ostwald process and the production of hydrogen cyanide according to the Andrussow process. Both these processes involve the presence of a precious metal containing catalyst, in particular, a Pd-containing catalyst. Such catalysts typically also comprise other precious metals, such as Pt. The volatile Pt is typically recovered by a Pd-containing recovery system. Indeed, in the production of nitric acid according to the Ostwald process, the first step involves the reaction of gaseous ammonia with gaseous oxygen provided, for example, through air onto a Pd-containing catalyst, thereby producing gaseous nitric oxide. The catalyst comprising Pd usually is part of a so-called ammonia oxidation burner in which the Pd-containing catalyst is located at the top surface of a so-called burner basket and supported by Raschig rings or catalyst particles, for example, for N₂O gas conversion and abatement located inside the burner basket. After contacting the Pd-containing catalyst, the ammonia and oxygen react at suitable temperatures and pressures as known to the skilled person to form gaseous nitric oxide, which passes through the burner basket and is further subject to the subsequent steps of the nitric acid production process. EP3727667A1 and WO2004/005187A1 describe potential designs for the ammonia oxidation burner basket. Regarding the production of hydrogen cyanide according to the Andrussow process, it also involves the reaction of gaseous ammonia, oxygen and methane that are fed to a reactor and subsequently reacted in the reactor onto a catalyst bed comprising Pd gauzes at suitable temperatures and pressures as known to the skilled person.

It results that the catalytic system of the disclosure is particularly helpful for performing the Ostwald and Andrussow processes generating nitric acid and hydrogen cyanide respectively, particularly for recovering volatile Pd generated from the Ostwald and Andrussow processes.

In one embodiment according to the system of the disclosure, the recovery system comprises Sm₂O₃. The inventor has found that the catchment of volatile Pd is even more increased when the rare earth oxide in the recovery system is Sm₂O₃.

In one embodiment according to the system of the disclosure, the recovery system comprises Gd₂O₃. The inventor has found that the catchment of volatile Pd is even more increased when the rare earth oxide in the recovery system is Gd₂O₃.

In certain embodiments, the recovery system comprising Sm₂O₃ and Gd₂O₃ according to the present disclosure may further comprise other metals, compounds or alloys suitable for the capture of volatile catalyst metals, such as volatile platinum group metals. Such metals or compounds include but are not limited to Pd, Au, Ag, and mixtures of alloys thereof.

In one embodiment according to the system of the disclosure, the Pd-containing catalyst is in the form of a catalytic gauze, and/or the recovery system has the shape of a honeycomb, a tablet, a pellet, a sponge, a foam, a net or a gauze, a coating on a ceramic support or a metallic support.

Honeycomb monoliths and nets offer a large geometric surface area and also very low pressure drop, which is of benefit for the gas to contact Pd catalytic metal or the rare earth oxide.

Gauzes also offer the advantage of low pressure drop, in addition to high mass transfer which favours both the catalytic conversion onto the Pd metal and the interaction of the volatile Pd with the rare earth oxide, resulting in the retaining of the volatile Pd by the rare earth oxide. The shape of pellets or tablets can be adjusted and optimised such as to offer a maximised geometric surface area. Further, pellets and tablets are easy to produce, and large volumes can be easily installed and subsequently used in large sized reactors such as circular ammonia oxidation burners.

Sponges, foams and ceramics also offer a large geometric surface area and also exhibit a very low pressure drop, which is of benefit for the gas to contact either the Pd catalytic metal or the rare earth oxide recovery metal. Moreover, sponges, foams and ceramics present the advantage of increased mass transfer with respect to other shapes.

The ceramic support is selected from but not limited to Al₂O₃, MgO, ZrO₂, yttria, magnesium or calcium stabilized zirconia, MgO, MgAl₂O₄, calcium aluminates, magnesium aluminium silicates, aluminium silicates, and silicon carbides.

The non-limiting examples of metallic support can be metal meshes, metal screens, ferritic steels, nickel-based alloys, iron-chromium-aluminium alloys and chromium-aluminium-iron alloys.

When the recovery system has the shape of a honeycomb, a tablet, a pellet or a net, the recovery system can be made by coating the rare earth oxide onto a support having the preferred shape. Coating of the rare earth oxide onto a support with a defined shape is particularly straightforward to perform and to achieve.

Alternatively, the shape can be produced from a composite of the rare earth oxide or from the solid pure rare earth oxide. Examples of production from a composite of the rare earth oxide or the pure rare earth oxide are extrusion, moulding, pressing or granulating the composite of the rare earth oxide or from the solid pure rare earth oxide.

In one aspect of the disclosure, use of the catalytic system comprising a Pd-containing catalyst and a recovery system downstream of the catalyst comprising one or more oxide of a rare earth metal selected from the group consisting of Sm₂O₃ and Gd₂O₃, for recovering volatile Pd, is disclosed.

The inventor has surprisingly found that, contrary to cerium oxide, CeO₂, and as shown in the examples, Sm₂O₃ and Gd₂O₃ retain volatile Pd, thereby recovering the volatile Pd that would otherwise be lost in the gas phase. Thereby, both emissions in the air and loss of precious and expensive metals are mitigated. Hence, Sm₂O₃ and Gd₂O₃ have the ability to complex with Pd. Further, the formed complexes are stable: upon shut-down of the reactor and exposure to ambient temperature and ambient air, the complexes do not hydrate and do not become brittle and dusty.

The present disclosure addresses the recovery of volatile Pd. Two very well know industrial production processes are the production of nitric acid according to the Ostwald process and the production of hydrogen cyanide according to the Andrussow process, as described elsewhere herein. As discussed in US4107278A, in the Andrussow process, the most widely used catalysts are the noble metal catalysts including Palladium.

It results that the use of Sm₂O₃ and Gd₂O₃, for recovering volatile Pd, is particularly helpful for performing the Ostwald and Andrussow processes generating nitric acid and hydrogen cyanide, respectively.

In one embodiment according to the use of the disclosure, volatile Pd is generated from the catalytic oxidation of ammonia into nitric oxide, particularly using a Pd-containing catalyst, or volatile Pd is generated from the catalytic reaction of ammonia with oxygen and methane into hydrogen cyanide.

In one embodiment according to the use of the disclosure, volatile Pd is further generated from a Pd-containing catchment system, positioned between the Pd-containing catalyst and the recovery system.

In one embodiment according to the use of the disclosure, the Pd-containing catchment system comprises an alloy of Pd with metals selected from but not limited to Ni, Co, Ag, Rh or combinations thereof. In one embodiment according to the use of the disclosure, the Pd-containing catchment system is based on a 5wt% Ni in Pd alloy.

In one embodiment according to the use of the disclosure, the Pd-containing catchment system is in the form of a gauze or metallic Pd layer on a ceramic support. The ceramic support is selected from but not limited to Al₂O₃, MgO, ZrO₂, yttria, magnesium or calcium stabilized zirconia, MgO, MgAl₂O₄, calcium aluminates, magnesium aluminium silicates, aluminium silicates, and silicon carbides.

In one embodiment according to the use of the disclosure, the oxide of the rare earth metal is Sm₂O₃. The inventor has found that the catchment of volatile Pd is increased when the rare earth oxide in the recovery system is Sm₂O₃. Said otherwise, there are benefits in terms of volatile Pd recovery associated with a recovery system comprising Sm₂O₃.

In one embodiment according to the use of the disclosure, the oxide of the rare earth metal is Gd₂O₃. The inventor has found that the catchment of volatile Pd is increased when the rare earth oxide in the recovery system is Gd₂O₃. Said otherwise, there are benefits in terms of volatile Pd recovery associated with a recovery system comprising Gd₂O₃.

In one embodiment according to the use of the disclosure, the oxide of a rare earth metal is comprised in a recovery system that has the shape of a honeycomb, a tablet, a pellet, a sponge, a foam, a net or a gauze, a coating on a ceramic support or a metallic support, as described elsewhere herein.

In one aspect of the disclosure, a method for oxidising ammonia into nitric oxide or for reacting ammonia with oxygen and methane, thereby generating hydrogen cyanide, is disclosed. The method comprises the steps of:
a) catalytically oxidising ammonia into nitric oxide, particularly in the production of nitric acid at a temperature ranging from 700 to 1100°C, more preferably from 700 to 950°C; or catalytically reacting ammonia with oxygen and methane thereby generating hydrogen cyanide, whereby volatile Pd is generated, particularly with a Pd-containing catalytic system;
b) contacting the volatile Pd generated in step a) with a recovery system comprising one or more oxide of a rare earth metal selected from the group consisting of Sm₂O₃ and Gd₂O₃; and
c) forming a solid composition comprising the oxide of a rare earth metal and Pd, wherein the oxides of the rare earth metal are bonded with Pd.

In an embodiment according to the method of the disclosure, in step a) volatile Pd is further generated from a Pd-containing catchment system, positioned between the Pd-containing catalytic system and the recovery system.

In an embodiment according to the method of the disclosure, in step b) volatile Pd is generated from a Pd-containing catchment system contacts the recovery system.

In one embodiment according to the method of the disclosure, the Pd-containing catchment system comprises an alloy of Pd with metals selected from but not limited to Ni, Co, Ag, Rh or combinations thereof. In one embodiment according to the method of the disclosure, the Pd-containing catchment system is based on a 5wt% Ni in Pd alloy.

In one embodiment according to the method the disclosure, the Pd-containing catchment system is in the form of a gauze or metallic Pd layer on a ceramic support. The ceramic support is selected from but not limited to Al₂O₃, MgO, ZrO₂, yttria, magnesium or calcium stabilized zirconia, MgO, MgAl₂O₄, calcium aluminates, magnesium aluminium silicates, aluminium silicates, and silicon carbides.

The inventor has surprisingly found that, contrary to cerium oxide, CeO₂ and as shown in the examples, Sm₂O₃ and Gd₂O₃ retain volatile Pt and Rh, thereby recovering the volatile Pd that would otherwise be lost in the gas phase. Thereby, both emissions in the air and loss of precious and expensive metals are mitigated.

Hence, Sm₂O₃ and Gd₂O₃ have the ability to complex with Pd. Further, the formed complexes are stable: upon shut-down of the reactor and exposure to ambient temperature and ambient air, the complexes do not hydrate and do not become brittle and dusty.

In one embodiment according to the method of the disclosure, the method further comprises step d) recovering Pd from the solid composition comprising the oxide of a rare earth metal and Pd.

In one embodiment according to the method of the disclosure, step a) is performed with a catalytic gauze, and step b) is performed with a recovery system that has the shape of a honeycomb, a tablet, a pellet, a sponge, a foam, a net or a gauze, a coating on a ceramic support or a metallic support.

In one embodiment according to the method of the disclosure, in step b) the oxide of the rare earth metal is Sm₂O₃. The inventor has found that the catchment of volatile Pd is more increased when the rare earth metal oxide in the recovery step is Sm₂O₃. Said otherwise, there are benefits in terms of volatile Pd recovery associated with a recovery step comprising Sm₂O₃.

In one embodiment according to the method of the disclosure, in step b) the oxide of the rare earth metal is Gd₂O₃. The inventor has found that the catchment of volatile Pd is more increased when the rare earth metal oxide in the recovery step is Gd₂O₃. Said otherwise, there are benefits in terms of volatile Pd recovery associated with a recovery step comprising Gd₂O₃.

In one embodiment according to the method of the disclosure, step a) comprises catalytically oxidising ammonia into nitric oxide at a temperature ranging from 700 to 950 °C, particularly at a pressure ranging between 2 bar and 20 bar.

By performing the conversion of ammonia into nitric oxide under such conditions, not only are the yield and the selectivity for nitric oxide improved, the emissions associated with the nitrous oxide side product are reduced. Further, nitric oxide can then be converted through further oxidation into the NOx gases NO₂ and N₂O₄ which when absorbed in water provide the very important chemical that is nitric acid.

### EXAMPLES

### Example 1: use of Sm₂O₃ for Pd catchment

Samarium Oxide (Sm₂O₃) was pressed into pellets of 10mm diameter and 5mm thickness. The pellets were sintered at 1100°C for 12 hours. Two pellets were installed downstream of Pd gauzes in an ammonia combustion reactor. One pellet of each composition was retained as a fresh reference sample. The reactor was operated at 5.7 bara pressure and the combusted gas contacting the Sm₂O₃ tablet was at 892°C, containing circa 10% NO, 15% H₂O, 6% O₂ and nitrogen.

In addition to these gases, the gas contained traces of volatile palladium. The reactor was operated for 5½ month campaign. After this period of exposure, the pellet was recovered from the pilot reactor for analysis. Prior to installation in the reactor, the lower side of the pellet had been marked, so that after exposure the upper side of the pellet that had most direct contact with the incoming flow of combusted gas (upper surface) could be identified. Analysis in a scanning electron microscope (SEM) with energy dispersive X-ray fluorescence analysis (EDS) was carried out. To obtain an average chemical composition of the near surface region of the upper side, EDS analysis of the tablet was carried out at low magnification. The normalised atomic ratios for Sm and Pd are shown in Table 1.

**Table 1. EDS analysis of the upper surface of the Sm₂O₃ pellet**

| **Sm Atomic %** | **Pd Atomic %** |
|---|---|
| 64.7 | 13.0 |

These results show that Pd was recovered.

### Example 2: use of Gd₂O₃ for Rh catchment

Gadolinium oxide (Gd₂O₃) pellet was produced from Gd₂O₃ powder, in the same manner as the corresponding Sm₂O₃ pellet produced in Example 1. After sintering the pellets at 1100°C for 12 hours, and marking of the lower surface, the pellet was installed in the reactor in the same manner as the corresponding Sm₂O₃ pellet produced in Example 1. The exposure of the Gd₂O₃ pellet in the reactor was carried out in parallel with the Sm₂O₃ pellet produced in Example 1. Average surface compositions of Gd and Pd after exposition in the reactor was determined in the SEM equipped with an EDS analyser. The results are shown in Table 2.

**Table 2. EDS analysis of the upper surface of the Gd₂O₃ pellet**

| **Gd Atomic %** | **Pd Atomic %** |
|---|---|
| 72.4 | 11.4 |

The results show that more Pd was recovered on the Gd₂O₃ pellet.

### Example 3: no catchment of Pd with CeO₂ (comparative example)

Under ambient conditions, cerium dioxide is found in the form of cerium dioxide, CeO₂, with a fluorite structure. Pellets of cerium dioxide were produced in the same way as Examples 1-2, with pellets produced from cerium dioxide and sintered at 1100°C for 12 hours.

**Table 3. EDS analysis of the upper surface of CeO2**

| **Ce atomic %** | **Pd atomic %** |
|---|---|
| 98.9 | 0.1 |

From table 3, it was observed that CeOz does not retain Pd.

## Claims

1. A catalytic system comprising:
• a Pd-containing catalyst; and
• a recovery system downstream of the catalyst;
wherein the recovery system comprises one or more oxide of a rare earth metal selected from the group consisting of Sm₂O₃ and Gd₂O₃.

2. The system according to claim 1, wherein the catalytic system further comprises a Pd-containing catchment system, positioned between the Pd-containing catalyst and the recovery system, particularly wherein the Pd-containing catchment system is based on or comprises a 5wt% Ni in Pd alloy.

3. The system according to claims 1 to 2, wherein the catalytic system is a system for the catalytic conversion of ammonia into nitric oxide, for the generation of nitric acid, or wherein the catalytic system is a system for the catalytic conversion of ammonia, oxygen and methane, for the generation of hydrogen cyanide.

4. The system according to any one of claims 1 to 3, wherein the recovery system comprises Sm₂O₃.

5. The system according to any one of the claims 1 to 3, wherein the recovery system comprises Gd₂O₃.

6. The system according to any one of claims 1 to 5, wherein the Pd-containing catalyst is in the form of catalytic gauze, and wherein the recovery system has the shape of a honeycomb, a tablet, a pellet, a sponge, a foam, a net or a gauze, a coating on a ceramic support or a metallic support.

7. Use of the catalytic system comprising a Pd-containing catalyst and a recovery system downstream of the catalyst comprising one or more oxide of a rare earth metal selected from the group consisting of Sm₂O₃ and Gd₂O₃, for recovering volatile Pd.

8. The use according to claim 7, wherein volatile Pd is generated from the catalytic oxidation of ammonia into nitric oxide, wherein volatile Pd is generated from the catalytic reaction of ammonia with oxygen and methane, thereby generating hydrogen cyanide and/or wherein volatile Pd is generated from a Pd-containing catchment system, positioned between the Pd-containing catalyst and the recovery system.

9. The use according to claim 7 or 8, wherein the oxide of the rare earth metal is Sm₂O₃.

10. The use according to claim 7 or 8, wherein the oxide of the rare earth metal is Gd₂O₃.

11. A method for oxidising ammonia into nitric oxide or for reacting ammonia with oxygen and methane, thereby generating hydrogen cyanide, comprising the steps of:
a) catalytically oxidising ammonia into nitric oxide, particularly in the production of nitric acid at a temperature ranging from 700 to 1100°C, more preferably from 700 to 950°C; or catalytically reacting ammonia with oxygen and methane thereby generating hydrogen cyanide, whereby volatile Pd is generated, particularly with a Pd-containing catalytic system;
b) contacting the volatile Pd generated in step a) with a recovery system comprising one or more oxide of a rare earth metal selected from the group consisting of Sm₂O₃ and Gd₂0₃; and
c) forming a solid composition comprising the oxide of a rare earth metal and Pd, wherein the oxides of the rare earth metal are bonded with Pd.

12. The method according to claim 11, wherein in step a) volatile Pd is further generated from a Pd-containing catchment system, positioned between the Pd-containing catalytic system and the recovery and wherein in step b) volatile Pd generated from a Pd-containing catchment system contacts the recovery system

13. The method according to claim 11 or 12, further comprising the step of d) recovering Pd from the solid composition comprising the oxide of a rare earth metal and Pd.

14. The method according to any one of claims 11 to 13, wherein in step b) the oxide of the rare earth metal is Sm₂O₃.

15. The method according to any one of claims 11 to 13, wherein in step b) the oxide of the rare earth metal is Gd₂O₃.
